# EUROPÄISCHE PATENTSCHRIFT

(11) **EP 1 478 915 B1**
(45) Veröffentlichungstag und Bekanntmachung des Hinweises auf die Patenterteilung: **10.09.2014**
(21) Anmeldenummer: 03704200.9
(22) Anmeldetag: 11.01.2003
(51) Int. Cl.: G01N 3/42

(54) **Härteprüfgerät mit einem über Lichtleiter beleuchteten lichtdurchlässigen Vickersdiamanten**
Hardness testing device comprising a transparent Vickers diamond which is illuminated by means of light guides
Appareil pour essais de dureté d'un diamant Vickers transparent, éclairé par des guides d'ondes optiques

(30) Priorität: 22.02.2002 DE 10207566
(43) Veröffentlichungstag der Anmeldung: 24.11.2004
(73) Patentinhaber: Agfa NDT GmbH, 50354 Hürth (DE)
(72) Erfinder: ANTHE, Enno, 53332 Bornheim-Sechtem (DE); LAMMERICH, Werner, 53721 Siegburg (DE)
(74) Vertreter: Bauer, Wulf
(86) Internationale Anmeldenummer: PCT/DE2003/000064
(87) Internationale Veröffentlichungsnummer: WO 2003/073072

(56) Entgegenhaltungen:
- WO-A-98/03848
- DE-A- 3 834 846
- DE-A- 4 109 014
- DE-A- 4 422 873
- FRANK STEFAN: "TRANSPYRAMIDAL INDENTATION VIEWING- NEW POSSIBLILITIES FOR MOBILE HARDNESS TESTING" 15TH WORLD CONFERENCE ON NON-DESTRUCTIVE TESTING, ROME, 15. - 21. Oktober 2000, XP002239738
- PATENT ABSTRACTS OF JAPAN vol. 006, no. 082 (P-116), 20. Mai 1982 (1982-05-20) & JP 57 020642 A (HAMAMATSU TV KK), 3. Februar 1982 (1982-02-03)
- PATENT ABSTRACTS OF JAPAN vol. 006, no. 252 (P-161), 10. Dezember 1982 (1982-12-10) & JP 57 148233 A (HITACHI SEISAKUSHO KK), 13. September 1982 (1982-09-13)
- PATENT ABSTRACTS OF JAPAN vol. 012, no. 114 (P-688), 12. April 1988 (1988-04-12) & JP 62 245137 A (TOSHIBA CORP), 26. Oktober 1987 (1987-10-26)

## Beschreibung

Die Erfindung bezieht sich auf ein Härteprüfgerät nach dem Oberbegriff des Anspruchs 1.

Ein derartiges Härteprüfgerät ist aus der Veröffentlichung des Autors Frank Stefan: "Transpyramidal Indentation Viewing - New Possiblities for Mobile Hardness Testing", 15th World Conference on non-destructive testing", Rome, 15-21 October 2000 bekannt. Man spricht auch von einer Beobachtung durch den Diamanten hindurch, also "trough diamond viewing". Die Messung erfolgt unter Last. In dem genannten Aufsatz ist eine schematische Abbildung wiedergegeben, danach ist der Diamant so an der frontseitigen Spitze des Gehäuses gehalten, dass seine Pyramidenflächen frei vorstehen. Im Gehäuse sind seitliche Bohrungen vorgesehen, die an den Lichteintrittsflächen münden. In ihnen befinden sich Leuchtdioden. Der Lichtaustrittsfläche ist eine Optik zugeordnet, der eine CCD-Kamera nachgeschaltet ist.

Aus DE 41 09 014 A1 ist eine Vorrichtung zur Härteprüfung bekannt, bei der einem lichtdurchlässigem Prüfkörper mittels eines Lichtleiters Licht zugeführt wird, das in Form eines Lichtbündels den Prüfkörper durchstrahlt. Dieses Lichtbündel wird an der von dem zu prüfenden Körper und dem Prüfkörper gebildeten Grenzfläche, der Eindruckoberfläche, reflektiert. Das reflektierte Licht wird mittels eines Lichtleiters einem Empfänger zugeführt. Aus dem Verhältnis des zugeführten Lichtstroms zum reflektierten Lichtstrom kann auf die Größe der Eindruckoberfläche geschlossen werden. Nach den Angaben in dem Dokument ist die reflektierte Lichtmenge proportional zur Eindruckoberfläche. Bei der Vorrichtung wird keine Videokamera eingesetzt, es wird kein Abbild der Eindrucksoberfläche mit einer Videokamera erfasst. Dadurch kann bei der Auswertung nicht auf die bekannte Form der Eindruckoberfläche korrigiert werden, es wird nicht die komplette Eindruckoberfläche erfasst und Reflektionen von außerhalb der Eindruckoberfläche oder mangelnde Reflektionen im Bereich der Eindruckoberfläche machen sich überproportional als Fehler im Messergebnis bemerkbar.

Aus DE 44 22 873 A1 ist ein rein mechanisch arbeitender Härteprüfer bekannt. Er hat einen Wegsensor, der die Relativbewegung zwischen einer Eindringeinheit und einer Referenzeinheit registriert. Aus der DE 38 34 846 A1 ist ein Härteprüfgerät bekannt, der insbesondere zur Prüfung der Tragfähigkeit des Grundes eines Gewässers vorgesehen ist. Er arbeitet ausschließlich mechanisch. Aus der WO 98/03848 A1 ist ein Härteprüfgerät bekannt, bei dem über einen Sensor Beschleunigung, Geschwindigkeit und Weg des Prüfkörpers ermittelt werden. Auch hier sind keine optischen Messungen vorgesehen.

Das erfindungsgemäße Gerät ist insbesondere für mobile Härteprüfungen geeignet, also sogenannte Handprüfungen. Es eignet sich aber grundsätzlich auch für Laboranwendungen.

Hier setzt nun die Erfindung ein. Sie hat es sich zur Aufgabe gemacht, das bislang nur schematisch dargestellte Härteprüfgerät der eingangs genannten Art so weiter zu entwickeln und auszubilden, dass im unteren, frontseitigen Endbereich des Härteprüfgerätes Platz gespart werden kann. Das Härteprüfgerät soll im Bereich des Diamanten relativ schlanker bauen als das vorbekannte Härteprüfgerät. Es soll möglich werden, das Gerät an seiner Frontseite so schlank und spitz auszubilden, dass auch in räumlich begrenzten Bedingungen eine Härteprüfung erfolgen kann, beispielsweise an den Flanken eines Zahnrades oder in anderen, schwer zugänglichen Stellen.

Ausgehend von dem Härteprüfgerät von der eingangs genannten Art wird diese Aufgabe gelöst die Merkmale des Anspruchs 1.

Erfindungsgemäß werden also Lichtleiter eingesetzt, die als handelsübliche Lichtleiterfasern, -rohre, -kunststoffstäbe oder dergleichen ausgeführt sein können. Sie haben ein Austrittsende, das sich in unmittelbarer Nähe der Lichteintrittsfläche des Diamanten befindet, vorzugsweise direkten Kontakt mit dieser Lichteintrittsfläche hat. Jeder Lichteintrittsfläche ist ein Lichtleiter zugeordnet. Es ist möglich einer Lichteintrittsfläche auch mehrere Lichtleiter zuzuordnen.

Am anderen Ende der Lichtleiter am Eintrittsende ist eine Lichtquelle vorgesehen. Hier wird typischerweise eine Leuchtdiode eingesetzt. Vorzugsweise hat jeder Lichtleiter seine eigene Lichtquelle. Es ist aber auch möglich, paarweise Lichtleiter mit einer Lichtquelle oder mehrere Lichtleiter an eine Lichtquelle anzuschließen. Vorzugsweise werden sehr dünne, handelsübliche Lichtleiter verwendet, insbesondere mit einem Durchmesser unter 0,7, insbesondere unter 0,2 mm.

Die Lichtleiter bieten den Vorteil, dass das Beleuchtungslicht präzise und punktgenau dem Diamanten zugeführt werden kann. Einerseits kann die Fläche am Austrittsende der Lichtleiter sehr klein gemacht werden, so dass die Einkoppelstelle für Licht in den Diamanten sehr präzise vorgegeben werden kann. Anderseits kann der Abstand und die Zuordnung zwischen dem unteren Austrittsende des Lichtleiters und der Lichteintrittsfläche des Diamanten präzise vorgegeben und beliebig eingestellt werden. Die Lichtleiter lassen sich wesentlich besser handhaben als Leuchtdioden, insbesondere ist ein Austausch einfacher.

Insbesondere bieten die Lichtleiter die Möglichkeit, im unteren, frontseitigen Endbereich des Härteprüfgerätes Platz zu sparen. Man erreicht ein schlankes Gerät, man kann seitlich des Diamanten das Gerät sehr schmal ausbilden. Es sind nun nicht mehr Leuchtdioden mit ihren elektrischen Anschlüssen in unmittelbarer Nähe des Diamanten angeordnet, vielmehr vorzugsweise dünne Lichtleiter, die man auch noch biegen kann, so dass das Gerät im Bereich des Diamanten relativ schlank baut. Dadurch ist es möglich, das Gerät an seiner Frontseite so schlank und spitz auszubilden, dass auch in räumlich begrenzten Bedingungen eine Härteprüfung erfolgen kann, beispielsweise an den Flanken eines Zahnrades oder in anderen, schwer zugänglichen Stellen.

Die Verwendung von Lichtleitern hat den großen Vorteil, dass die Lichtquellen, insbesondere die Leuchtdioden, auf einer elektronischen Leiterplatine des Elektronikteils angeordnet werden können. Separate Zuleitungen vom Elektronikbaustein zu den einzelnen Leuchtdioden, so wie dies nach dem eingangs genannten Stand der Technik notwendig ist, entfallen. Dadurch werden Aufbau, Wartung und Herstellung des Gerätes vereinfacht.

Schließlich ist noch auf folgenden Vorteil hinzuweisen: Bei fertig konfektionierten Leuchtdioden, wie sie von einem Herstellen bezogen werden können, befindet sich der Lichtaustrittspunkt innerhalb eines spezifizierten Bereichs des Gehäuses der Leuchtdiode. Der genaue Ort schwankt von Leuchtdiode zu Leuchtdiode. Eine Justierung der Leuchtdioden beim Gerät nach dem Stand der Technik ist mit sehr großem Aufwand verbunden. Dagegen lässt sich eine Justierung des Eintrittsendes der Lichtleiter zu einer Leuchtdiode, die sich auf einer Trägerplatine befindet, mit vernünftigem Aufwand durchführen. Sowohl das Einkoppeln des Lichtes als auch das Auskoppeln ist somit insgesamt vereinfacht. Durch die Lichtleiter lässt sich das Licht wesentlich präziser, ortsgenauer und winkelgenauer bei kleinerem Querschnitt in den Diamanten einbringen.

Gemäß der Erfindung ist der Lichtleiter gekrümmt, insbesondere sind die Lichtleiter so gekrümmt, dass sie möglichst nahe der Achse des Gerätes bleiben. Es ist also jeder Lichtleiter auf seinem Weg zum Leuchtmittel hin zu einer Achse des Gehäuses hingekrümmt. Dadurch wird für die Beleuchtung seitlich nicht viel Platz benötigt, die Lichtleiter bewirken also eine allenfalls geringe Verdickung des Gerätes in Nähe des Vickersdiamanten.

In bevorzugter Ausbildung haben die Lichtleiter eine mechanische Schutzhülle, die sie zumindest nach außen hin abdeckt. Vorzugsweise ist die mechanische Schutzhülle rohrförmig. Dies ermöglicht es, die Lichtleiter gegen mechanische Angriffe zu schützen. Der Platzbedarf ist gering, es wird kein zusätzlicher Schutzmantel als Teil des Gehäuses rings um die Lichtleiter benötigt.

Bevorzugt ist das Gerät für mobile Einsätze geeignet, also als Handgerät ausgeführt. Hierzu ist es vorteilhaft, dass das Gehäuse an seinem Außenmantel eine Grifffläche aufweist, die von einer menschlichen Hand ergriffen werden kann. Vorzugsweise ist also das Gerät griffelförmig. Der Außendurchmesser der Grifffläche liegt vorzugsweise zwischen 5 und 12 cm.

In einer bevorzugten Weiterbildung hat das Gehäuse einen ersten Gehäuseteil, der das Frontende ausbildet, und weiterhin einen zweiten Gehäuseteil, der erste Gehäuseteil ist relativ zum zweiten Gehäuseteil entlang einer Achse des Gehäuses verschiebbar, zwischen dem ersten Gehäuseteil und dem zweiten Gehäuseteil ist eine mechanische Feder, insbesondere eine Druckfeder, angeordnet. Durch Verschieben des ersten Gehäuseteils gegenüber dem zweiten Gehäuseteil, der wiederum auf ein zu prüfendes Werkstück aufgesetzt ist, kann eine Prüfkraft aufgebracht werden. Zugleich kann diese Bewegung genutzt werden, das Gerät selbst einzuschalten. Es ist aber auch möglich einen separaten Einschalter vorzusehen.

Als sehr vorteilhaft hat es sich erwiesen, dem Gehäuse einen Beschleunigungssensor zuzuordnen. Er gibt ein Winkelsignal ab, das abhängig ist von dem Winkel, den die Achse des Gehäuses mit dem lokalen Gravitationssektor einschließt. Dieses Winkelsignal wird einer Steuerschaltung innerhalb der Elektronikeinheit zugeleitet. Unter Berücksichtigung der bekannten Masse des Vickersdiamanten und damit unmittelbar verbundener Teile sowie sonstiger Beiträge, wie zum Beispiel Reibung und ein Masseanteil der Feder, kann ein Korrekturwert für die Härtemessung errechnet werden. Damit kann das Härteprüfgerät in unterschiedlicher Orientierung zum Gravitationsvektor an ein Werkstück angesetzt werden, wobei der angezeigte Härtewert unabhängig ist von der Orientierung. Man kann beispielsweise Überkopf arbeiten, also in Gegenrichtung zum Gravitationsvektor, oder das Gerät seitlich ansetzen. Unter Gravitationsvektor wird ein Einheitsvektor verstanden, der vom Berührungspunkt des Vickersdiamanten am Werkstück die Richtung des Schwerefeldes anzeigt, im Allgemeinen also zum Erdmittelpunkt gerichtet ist.

Schließlich hat es sich sehr vorteilhaft erwiesen, die Entfernung zwischen dem ersten Gehäuseteil und dem zweiten Gehäuseteil durch einen entsprechenden Sensor zu erfassen. Auf diese Weise wird die Auslenkung der Feder, die im wesentlichen die Prüfkraft bestimmt, erfasst. Dadurch liegt in der Elektronikeinheit ein Signal über die jeweilige Kraft, mit der der Vickersdiamant auf ein zu prüfendes Werkstück einwirkt, vor. Es kann bei Erreichen einer vorgegebenen Prüfkraft gemessen werden. Vorzugsweise ist die vorgegebene Prüfkraft dabei auch abhängig vom Signal des Beschleunigungssensors. Es kann aber auch bei einer vorgegebenen Prüfkraft gemessen werden und später der Einfluss des Schwerefeldes im Messergebnis berücksichtigt werden.

Weitere Vorteile und Merkmale ergeben sich aus den übrigen Ansprüchen sowie der nun folgenden Beschreibung eines nicht einschränkend zu verstehenden Ausführungsbeispiels der Erfindung, das im folgenden unter Bezugnahme auf die Zeichnung näher erläutert wird. In dieser Zeichnung zeigen:

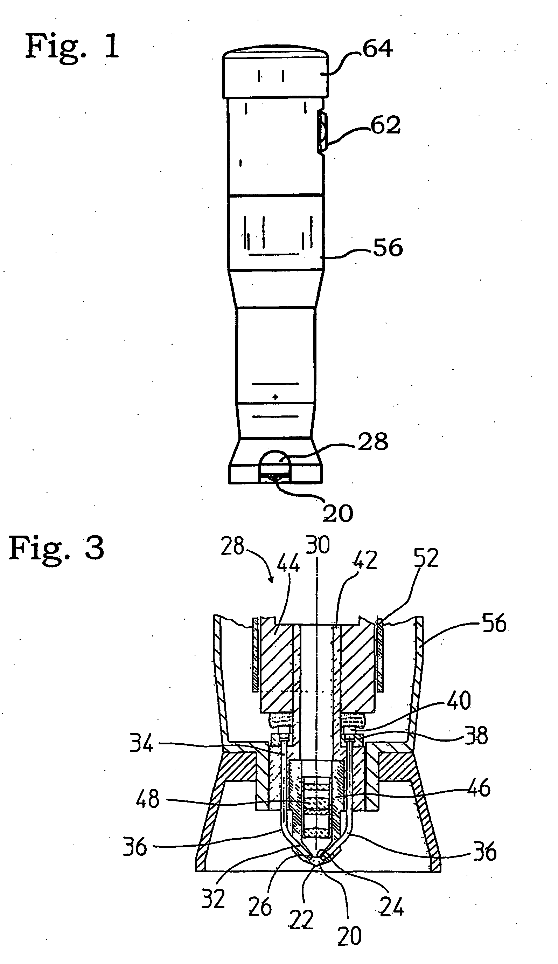

- FIG. 1:: eine Seitenansicht des Härteprüfgerätes,

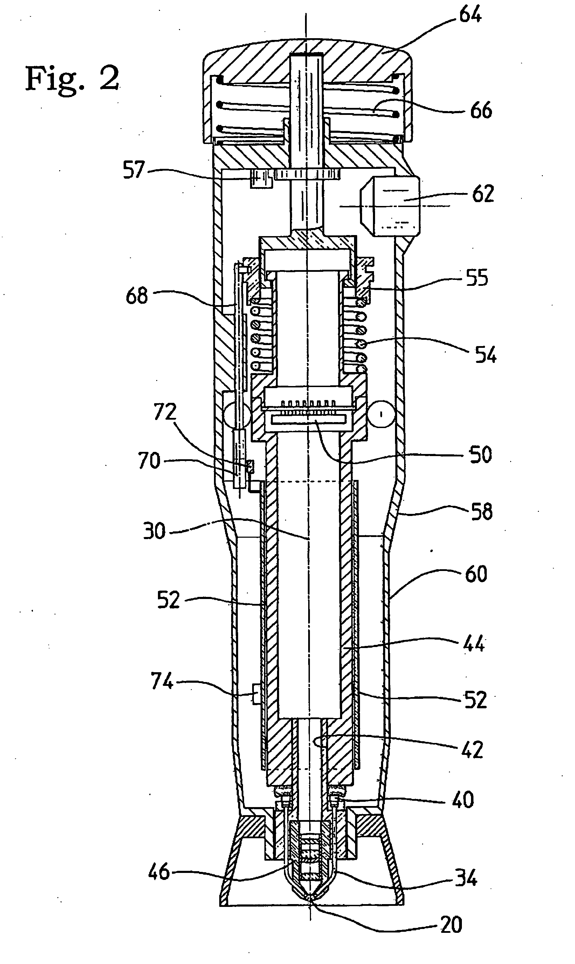

- FIG. 2:: einen Axialschnitt durch das Härteprüfgerät gemäss Figur 1,
- FIG. 3:: ein unteres Teilstück des Schnittbildes gemäss Figur 2 in vergrösserter Darstellung,
- FIG. 4:: ein Teilstück einer Untersicht, also eine Ansicht des Frontendes des Härteprüfgerätes und
- FIG. 5:: eine Ansicht entsprechend Figur 4 auf den Diamanten.

Das Härteprüfgerät hat einen Diamanten 20, er ist lichtdurchlässig, hat möglichst wenig Einschlüsse und kann eine Farbe, beispielsweise gelb, aufweisen. Er bildet an seiner Spitze eine Vickerspyramide aus, sie wird gebildet von vier Pyramidenflächen 22. Sie laufen in einer Spitze zusammen. Gegenüberliegend der Spitze befindet sich eine Lichtaustrittsfläche 24, die möglichst eben ausgeführt ist. Durch diese Lichtaustrittsfläche 24 kann die Spitze bzw. ein Eindruck in einem zu prüfenden Werkstück durch den Diamanten 20 hindurch inspiziert werden. Um die Lichtaustrittsfläche 24 herum befinden sich im Winkel von 45° zu dieser vier Lichteintrittsflächen 26, jeder Pyramidenfläche 22 ist jeweils eine Lichteintrittsfläche 26 zugeordnet. Der Diamant ist etwa 1,6 mm hoch.

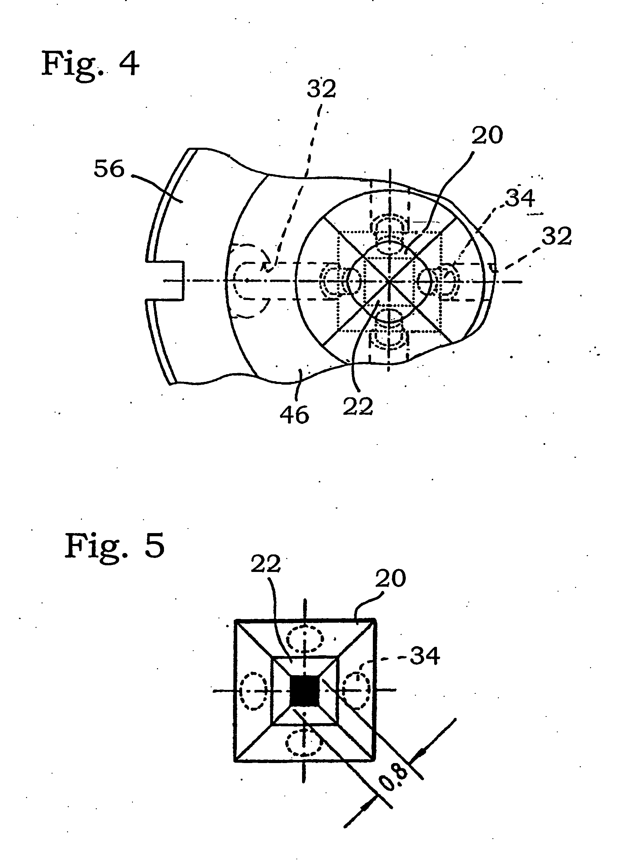

Der Diamant ist formschlüssig eingesintert an einem Frontende eines ersten Gehäuseteils 28, das auch als Innenteil bezeichnet wird. Im wesentlichen ragt nur die Vickerspyramide des Diamanten aus dem ersten Gehäuseteil 28 nach unten vor. Die Spitze der Vickerspyramide befindet sich auf einer Achse 30 des ersten Gehäuseteils 28. Der erste Gehäuseteil 28 hat im Winkel von 45° zur Achse 30 verlaufende Bohrungen 32, die möglichst genau mittig auf den Lichteintrittsflächen 26 enden. Sie sind gestuft ausgeführt, wie Figur 4 zeigt. Sie nehmen Lichtleiter 34 auf, die hier als polierte Stäbe aus PMMA ausgeführt sind. Sie sind in starren Schutzrohren 36 untergebracht, die an einer Stufe der Bohrung 32 angesetzt sind, sodass sie nicht in direkten Kontakt mit der Lichteintrittsfläche 26 kommen können.

Für jede Lichteintrittsfläche 26 ist ein Lichtleiter 34 vorgesehen. Die Schutzrohre 36 sind gebogen, damit sind auch die Lichtleiter 34 gebogen. Von einem Verlauf im Winkel von 45° zur Achse 30 sind sie zur Achse hin gekrümmt und verlaufen über den grössten Teil ihrer Länge parallel zur Achse 30. Durch die Schutzrohre 34 wird der Verlauf der einzelnen Lichtleiter 34 vorgegeben.

Die vier Schutzrohre 36 durchlaufen eine ringförmige Halterung, oberhalb dieser Halterung befindet sich eine ringförmige Platine 38, die Teil einer Elektronikeinheit ist. In dieser Platine sind vier Leuchtdioden 40 angeordnet, jeweils eine Leuchtdiode 40 ist einem Lichtleiter 34 zugeordnet und optisch auf dessen Eintrittsende ausgerichtet.

Die Leuchtdioden emittieren bei etwa 630 Nanometer. Oberhalb der Platine 38 befindet sich ein elastischer Ring. Dieser und die Platine umgeben ein unteres Innenrohr 42, oberhalb des elastischen Rings beginnt ein oberes Innenrohr 44. Beide sind zentrisch zur Achse 30 und über ein Feingewinde miteinander schraubverbunden, sodass sie in Richtung der Achse gegeneinander verstellt werden können. Diese beiden Innenrohre 42, 44 gehören zum ersten Gehäuseteil 28. Unterhalb des unteren Innenrohres 42 und mit diesem verbunden befindet sich ein gestuftes Aufnahmestück 46, das den Diamanten 20 aufnimmt. Es ist ebenfalls hohl und hat in seinem Innenraum eine Optik aus drei Linsen und ein Farbfilter.

Am oberen Ende des oberen Innenrohrs 44 ist eine CCD-Kamera 50, auch Videokamera genannt, angeordnet. Die Optik 48 projiziert das Bild der Pyramidenflächen 22 auf diese Videokamera 50. Zur Scharfstellung kann der Abstand zwischen den beiden Innenrohren 42, 44 verändert werden. Die Videokamera 50 ist an die Elektronikeinheit angeschlossen. Um die Innenrohre 42, 44 herum sind Leiterplatten 52 angeordnet, die ebenfalls zur Elektronikeinheit gehören.

Oberhalb der Kamera 50 ist eine Messfeder 54 vorgesehen, sie stützt sich an ihrem unteren Ende über ein Zwischenstück am oberen Innenrohr 44 und damit letztlich am Diamanten 20 ab. An ihrem oberen Ende stützt sie sich an einem Zwischenteil 55 ab, das sich - in Ruhestellung des Gerätes, wie dargestellt - im Anschlag an einem zweiten Gehäuseteil 56 befindet. Zu diesem gehört auch ein äusserer, mehrstückiger Mantel 58, der eine Grifffläche 60 ausbildet und im wesentlichen zylindrisch ist. Im zweiten Gehäuseteil 56 ist ein Steckanschluss 62 vorgesehen, über den das Gerät mit einem externen Bedienteil verbunden werden kann. In diesem externen Bedienteil (nicht dargestellt) befindet sich beispielsweise eine Anzeigeeinheit, die den ermittelten Härtewert anzeigt. Es kann auch ein Netzgerät darin angeordnet sein.

Oberhalb des zweiten Gehäuseteils übergreift ein Betätigungsdeckel 64 das oben offene Ende des zweiten Gehäuseteils. Er wird über eine Schraubenfeder 66, die als Druckfeder ausgeführt ist, vom zweiten Gehäuseteil 56 weggedrückt und in einer Anschlagposition gehalten. Drückt man den Betätigungsdeckel gegen die Wirkung dieser Schraubenfeder 66 ein, wird ein Auslöser (Mikroschalter 57) betätigt, der das Gerät für einen Messvorgang vorbereitet, insbesondere die Elektronikeinheit einschaltet. Der Aufbau ähnelt einem Druckkugelschreiber, dessen Druckknopf den Betätigungsdeckel bildet, dessen Gehäuse das zweite Gehäuseteil bildet und dessen Miene das erste Gehäuseteil ist.

Seitlich der Messfeder 54 befindet sich eine Stange 68, die zu einem Sensor für die Erfassung des Weges zwischen den beiden Gehäuseteilen 28, 56 gehört. Sie ist mit dem Zwischenteil 55 verbunden und trägt an ihrem unteren Ende einen Stabmagneten 70. Dieser befindet sich in unmittelbarer Nachbarschaft einer Hallsonde 72, die auf einer der Leiterplatten 52 angeordnet ist, welche direkt mit dem ersten Gehäuseteil 28 verbunden sind. Bei Bewegung des Magneten 70 relativ zur Hallsonde 72 wird ein Signal erhalten, dass in der Elektronikeinheit ausgewertet wird und eine Information über den relativen Abstand zwischen den beiden Gehäuseteilen 28, 56 liefert. Weiterhin ist auf einer der Leiterplatten 52 ein Beschleunigungssensor 74 angeordnet, verwendet wird beispielsweise ein Baustein ADXL 105 der Firma Analog Devices. Auch er ist Teil der Elektronikeinheit.

Bei einer Handmessung wird das Gerät mit dem zweiten Gehäuseteil 56 auf die Oberfläche eines zu prüfenden Werkstücks aufgesetzt. Im gezeigten Ausführungsbeispiel hat das zweite Gehäuseteil 56 einen Sondenschuh, der seitliche Fenster hat, sodass die Spitze des Diamanten 20 beobachtet werden kann. Das Gerät wird an der Grifffläche 60 mit einer Hand gehalten. Die andere Hand drückt den Betätigungsdeckel 64 ein. Dadurch wird die Elektronik eingeschaltet.

Wird der Druck nun weiter aufrechterhalten, drückt der Betätigungsdeckel 64 über zwischengeschaltete Stäbe und das Zwischenteil 55 auf das obere Ende der Messfeder 54. Dadurch wird das erste Gehäuseteil 28 nach unten vorbelastet und verschoben, die Spitze des Diamanten 20 kann in Kontakt mit der Oberfläche des Werkstücks kommen. Durch fortgesetzte Kraft auf den Betätigungsdeckel 64 wird die Prüfkraft aufgebracht. Die Prüfkraft wird über den Wegsensor, der sich aus Stabmagnet 70 und Hallsonde 72 zusammensetzt, erfasst. Zugleich wird das Signal des Beschleunigungssensors 74 ausgewertet. Hat die Prüfkraft einen gewünschten Wert, so wird eine Messung durchgeführt.

Aufgrund der Prüfkraft ist die Vickerspyramide des Diamanten 20 um einen gewissen Betrag in das zu prüfende Werkstück eingedrungen. Dieser Betrag ist schwarz in Figur 5 dargestellt. Die Diagonale dieses Bereiches betrage beispielsweise 0,8. In der Videokamera ist der im Kontakt mit dem Werkstück befindliche Teil der Vickerspyramide deutlich zu unterscheiden mit dem nicht in Kontakt befindlichen Teil. Über das Videobild kann die Diagonale, die im Beispiel 0,8 mm beträgt, ermittelt werden. Über die Diagonale wird der Härtewert errechnet und in der Anzeigeeinheit (nicht dargestellt) angezeigt.

## Patentansprüche

1. Härteprüfgerät mit a) einem Vickersdiamanten (20), der lichtdurchlässig ist und der Pyramidenflächen (22), Lichteintrittsflächen (26) und eine Lichtaustrittsfläche (24) aufweist, mit b) einem Gehäuse, das ein Frontende hat, in dem der Vickersdiamant (20) gehalten ist, mit c) einer der Lichtaustrittsfläche (24) zugeordneten Videokamera und mit d) Leuchtmitteln, die den Lichteintrittsflächen (26) zugeordnet sind, **dadurch gekennzeichnet, dass** das Härteprüfgerät weiterhin eine Elektronikeinheit aufweist, die im Gehäuse untergebracht ist, dass die Videokamera ausgangsseitig an die Elektronikeinheit angeschlossen ist, dass sich zwischen den Leuchtmitteln und den jeweiligen Lichteinstrittsflächen (26) Lichtleiter (34) befinden, und dass die Lichtleiter (34) auf ihrem Weg zum Leuchtmittel hin ausgehend von einem quer zu den Lichteinstrittsflächen (26) gerichteten Verlauf zu einer Achse (30) des Gehäuses hingekrümmt verlaufen.

2. Härteprüfgerät nach Anspruch 1, **dadurch gekennzeichnet, dass** die Leuchtmittel in der Elektronikeinheit angeordnet sind.

3. Härteprüfgerät nach Anspruch 1, **dadurch gekennzeichnet, dass** die Lichtleiter (34) eine mechanische Schutzhülle aufweisen, die sie zumindest nach außen hin abdeckt.

4. Härteprüfgerät nach Anspruch 1, **dadurch gekennzeichnet, dass** das Gehäuse an seinem Außenmantel eine Grifffläche (60) aufweist, die von einer menschlichen Hand ergriffen werden kann.

5. Härteprüfgerät nach Anspruch 1, **dadurch gekennzeichnet, dass** das Gehäuse einen ersten Gehäuseteil (28), der das Frontende ausbildet,
und einen zweiten Gehäuseteil (56) aufweist, dass der erste Gehäuseteil (28) relativ zum zweiten Gehäuseteil (56) entlang einer Achse (30) des Gehäuses verschiebbar angeordnet ist und dass zwischen dem ersten Gehäuseteil (28) und dem zweiten Gehäuseteil (56) eine Messfeder (54), angeordnet ist.

6. Härteprüfgerät nach Anspruch 5, **dadurch gekennzeichnet, dass** ein Wegsensor im Gehäuse vorgesehen ist, der den jeweiligen Abstand zwischen dem ersten Gehäuseteil (28) und dem zweiten Gehäuseteil (56) erfasst und der mit der Elektronikeinheit verbunden ist.

7. Härteprüfgerät nach Anspruch 1, **dadurch gekennzeichnet, dass** dem Gehäuse ein Beschleunigungssenor (74) zugeordnet ist, der mit der Elektronikeinheit verbunden ist.

8. Härteprüfgerät nach Anspruch 1, **dadurch gekennzeichnet, dass** ein Betätigungsdeckel (64) vorgesehen ist, in dem ein Mikroschalter (57) angeordnet ist.

## Claims

1. A hardness testing device with a) a Vickers diamond (20), which is transparent and which has pyramid surfaces (22), light-entry surfaces (26) and a light-exit surface (24), with b) a housing having a front end in which the Vickers diamond (20) is held, with c) a video camera assigned to the light-exit surface (24), and with d) lighting means assigned to the light-entry surfaces (26), **characterised in that** the hardness testing device further comprises an electronic unit accommodated in the housing, that the video camera is connected on its output to the electronic unit, that light guides (34) are located between the lighting means and the respective light-entry surfaces (26), and that the light guides (34) extend, starting from a course directed transversely to the light-entry surfaces (26), in a manner bent towards an axis (30) of the housing on their route to the lighting means.

2. The hardness testing device according to claim 1, **characterised in that** the lighting means are disposed in the electronic unit.

3. The hardness testing device according to claim 1, **characterised in that** the light guides (34) comprise a mechanical protective sheath covering them at least outwardly.

4. The hardness testing device according to claim 1, **characterised in that** the housing comprises on its outer jacket a gripping surface (60) that can be gripped with a human hand.

5. The hardness testing device according to claim 1, **characterised in that** the housing comprises a first housing part (28) forming the front end and a second housing part (56), that the first housing part (28) is disposed so as to be displaceable relative to the second housing part (56) along an axis (30) of the housing, and that a measuring spring (54) is disposed between the first housing part (28) and the second housing part (56).

6. The hardness testing device according to claim 5, **characterised in that** a distance sensor is provided in the housing which detects the respective spacing between the first housing part (28) and the second housing part (56) and which is connected to the electronic unit.

7. The hardness testing device according to claim 1, **characterised in that** an acceleration sensor (74), which is connected to the electronic unit, is assigned to the housing.

8. The hardness testing device according to claim 1, **characterised in** an actuating cover (64) is provided, in which a micro-switch is arranged.

## Revendications

1. Appareil pour essai de dureté comprenant a) un diamant Vickers (20) qui est translucide et qui présente des surfaces pyramidales (22), des surfaces d'entrée de la lumière (26) et une surface de sortie de la lumière (24), b) un boîtier qui présente une extrémité frontale dans laquelle ledit diamant Vickers (20) est maintenu, c) une caméra vidéo qui est associée à ladite surface de sortie de la lumière (24) ainsi que d) des moyens lumineux qui sont associés aux surfaces d'entrée de la lumière (26), **caractérisé par le fait que** ledit appareil pour essai de dureté présente en outre une unité électronique qui est logée à l'intérieur du boîtier, que ladite caméra vidéo est connectée côté sortie à ladite unité électronique, que des guides de lumière (34) se trouvent entre lesdits moyens lumineux et les surfaces respectives d'entrée de la lumière (26), et que les guides de lumière (34) s'étendent, sur leur chemin en direction du moyen lumineux, partant d'un tracé dirigé transversalement aux surfaces d'entrée de la lumière (26), de manière courbée vers un axe (30) du boîtier.

2. Appareil pour essai de dureté selon la revendication 1, **caractérisé par le fait que** les moyens lumineux sont disposés à l'intérieur de ladite unité électronique.

3. Appareil pour essai de dureté selon la revendication 1, **caractérisé par le fait que** les guides de lumière (34) présentent une gaine protectrice mécanique qui recouvre ceux-ci au moins vers l'extérieur.

4. Appareil pour essai de dureté selon la revendication 1, **caractérisé par le fait que** ledit boîtier présente, sur sa surface latérale extérieure, une surface de préhension (60) qui peut être saisie par une main humaine.

5. Appareil pour essai de dureté selon la revendication 1, **caractérisé par le fait que** ledit boîtier comprend une première partie de boîtier (28) qui forme ladite extrémité frontale ainsi qu'une seconde partie de boîtier (56), que ladite première partie de boîtier (28) est agencée de manière à être déplaçable suivant un axe (30) du boîtier par rapport à ladite seconde partie de boîtier (56) et qu'un ressort de mesure (54) est disposé entre ladite première partie de boîtier (28) et ladite seconde partie de boîtier (56).

6. Appareil pour essai de dureté selon la revendication 5, **caractérisé par le fait qu'**un capteur de déplacement est prévu à l'intérieur du boîtier, qui détecte la distance respective entre ladite première partie de boîtier (28) et ladite seconde partie de boîtier (56) et qui est relié à ladite unité électronique.

7. Appareil pour essai de dureté selon la revendication 1, **caractérisé par le fait qu'**au boîtier est associé un capteur d'accélération (74) qui est relié à ladite unité électronique.

8. Appareil pour essai de dureté selon la revendication 1, **caractérisé par le fait qu'**un couvercle de commande (64) est prévu dans lequel est disposé un microrupteur (57).
